# EUROPEAN PATENT SPECIFICATION

(11) **EP 3 770 780 B1**
(45) Date of publication and mention of the grant of the patent: **07.12.2022**
(21) Application number: 19793952.3
(22) Date of filing: 15.03.2019
(51) Int. Cl.: G06F 21/32, G06T 7/00

(54) **IDENTIFICATION SYSTEM, METHOD, AND PROGRAM**
IDENTIFIZIERUNGSSYSTEM, VERFAHREN UND PROGRAMM
SYSTÈME D'IDENTIFICATION, PROCÉDÉ ET PROGRAMME

(30) Priority: 24.04.2018 JP 2018083479
(43) Date of publication of application: 27.01.2021
(73) Proprietor: Cyberware Inc., Tokyo 162-0825 (JP)
(72) Inventor: HIRAKA Takafumi, Tokyo 162-0825 (JP); GOTOH Masamichi, Tokyo 162-0825 (JP); NAGAKUBO Kosuke, Tokyo 162-0825 (JP)
(74) Representative: Bandpay & Greuter
(86) International application number: PCT/JP2019/011002
(87) International publication number: WO 2019/208020

(56) References cited:
- WO-A1-2016/109841
- JP-A- 2004 030 334
- JP-A- 2005 129 016
- JP-A- 2007 262 695
- JP-A- 2016 051 482
- US-A1- 2014 337 930
- US-A1- 2016 063 235

## Description

### Technical Field

The present invention relates to a personal identification system. In particular, the invention relates to a personal identification system that performs personal identification using biological information such as a face or an iris for personal identification.

### Background Art

Conventionally, the personal identification system using the biological information such as the face or the iris has been known as a means for the identity verification used in the entry visa inspection at an airport, the entrance inspection at a building, or the user identification for a smartphone for example. The identification using the biological information such as the face or the iris is determined by photographing the face or the iris of a user to find whether or not the face or the iris matches a face image or an iris image registered in a passport or a database and/or feature parameters showing the features thereof. The identification using the biological information such as the face or the iris has been rapidly and widely used in recent years because this identification eliminates, when compared with the biological personal identification based on a fingerprint or a vein for example as the biological information, the need for the user to place his or her hand or finger before a recognition device to thereby allow the user to use both hands freely for improved convenience for example.

On the other hand, the identification system using the face or the iris for example as the biological information has been known to undesirably cause a so-called "identity theft" trying to cancel the security using a photograph of the face (or the iris) of a registrant or an image of the face (or the iris) displayed in a tablet terminal.

### Related Art Literature

### Patent Literature

[Patent Document1]Japanese Patent Laid-Open No. 2017-4398. Documents US2016/063235 and WO2016/109841 form part of the background art.

### Summary of Invention

In order to tackle the "identity theft" issue using the photograph of the face (or the iris) and the image of the face (or the iris), various techniques have been suggested to detect that an identification target is not biological and intends the "identity theft".

For example, one method has been known to determine the "identity theft" based on the existence or nonexistence of a biological motion such as a predetermined number or more of "blinks" within a predetermined time. This method has a disadvantage that a user having a very small number of "blinks" may be errorneously determined as the "identity theft" in spite of the existence of the biological information

Another "identity theft" determination method has been known according to which the user is instructed to "turn to the right or turn to the left" for identification for example to determine the "identity theft" based on whether or not the instruction is carried out. This method requires the user to understand what is instructed to act according to the instruction. Thus, this method has a disadvantage that a foreign user insufficiently understanding the instruction for example may be errorneously determined as the "identity theft" in spite of the existence of the biological information.

According to another method of Patent Document 1, an action such as "blinks" or "face direction" for example is registered in advance and the "identity theft" is determined by determining whether or not this action is performed for identification. This method has a disadvantage that a user may forget an action registered in advance or the action may be easily imitated using an image for example.

Furthermore, in the case of the above methods of determining the "identity theft" based on the detection of a user action, the above-described disadvantages make users feel troublesome to use the "identity theft" determination function, thus undesirably causing the identification function to be turned OFF for example.

Furthermore, another method has been known to use a three-dimensional measurement means (e.g., an infrared camera or an infrared pointer) provided in a smartphone for example to determine the "identity theft" by the measurement showing that a photographed face (iris) is steric to verify that the face (iris) is not the one in a photograph or an image. The three-dimensional measurement means is very high-cost and difficult to obtain when compared with general cameras.

As described above, the conventional techniques to detect the "identity theft" have their own disadvantages. Thus, there have been no technique to be able to compensate, by a simple configuration change, the vulnerability of the personal identification system using the biological information such as the face or the iris.

This application discloses a personal identification system that is more robust, regardless of the simple configuration change, than the conventional techniques by a combination with the conventional personal identification system using the biological information such as a face or an iris.

One aspect of the invention of this application provides a personal identification system for the personal identification based on individual identification information, comprising: a generation means for generating a display pattern that is a combination pattern of sequentially-changing colors; an output means for outputting the generated display pattern for display; a photographing means for acquiring, during the output for display output, a plurality of images obtained by photographing an eye of a user; an estimation means for estimating a display pattern based on the color gamuts of cornea regions of the eye included in the respective acquired plurality of images; and a decision means for deciding, when the conformity is found between the estimated display pattern and the outputted display pattern for display, that the user is not an identity theft.

Another aspect of the invention of this application provides an identification method for the identification based on individual identification information, comprising: a generation step of generating a display pattern that is a combination pattern of sequentially-changing colors; an output step of outputting the generated display pattern for display; a photographing step of acquiring, during the output for display output, a plurality of images obtained by photographing an eye of a user; an estimation step of estimating a display pattern based on the color gamuts of cornea regions of the eye included in the respective acquired plurality of images; and a decision step of deciding, when the conformity is found between the estimated display pattern and the outputted display pattern for display, that the user is not an identity theft.

Still another aspect of the invention of this application provides a personal identification program for the personal identification based on individual identification information. The personal identification program allows a computer to function as: a generation means for generating a display pattern that is a combination pattern of sequentially-changing colors; an output means for outputting the generated display pattern for display; a photographing means for acquiring, during the output for display output, a plurality of images obtained by photographing an eye of a user; an estimation means for estimating a display pattern based on the color gamuts of cornea regions of the eye included in the respective acquired plurality of images; and a decision means for deciding, when the conformity is found between the estimated display pattern and the outputted display pattern for display, that the user is not an identity theft.

### Brief Description of Drawings

Fig. 1 illustrates a hardware configuration example of a personal identification system according to one embodiment.
Fig. 2 illustrates the functional blocks of one example of an identification processing apparatus 100 of a personal identification system according to one embodiment.
Fig. 3 illustrates the outline of a display pattern generated by a display pattern generation unit 114.
Fig. 4 illustrates one example of a specific display pattern.
Fig. 5 is a processing flow diagram illustrating the processing flow of the preregistration in a personal identification system according to one embodiment.
Fig. 6 illustrates the details of a reflection characteristic calibration processing S32.
Fig. 7 illustrates the processing flow showing the flow of the processing of a presence decision processing of one embodiment.
Fig. 8 illustrates the details of a pattern generation parameter deciding processing S51 executed by a pattern generation information acquisition unit 113.
Fig. 9 illustrates the details of a display pattern generation processing S52 executed by the display pattern generation unit 114.
Fig. 10 illustrates the details of a photographing frame accumulation processing S53 executed by a photographing frame accumulation unit 115.
Fig. 11 illustrates the details of a processing S533 executed by the photographing frame accumulation unit 115.
Fig. 12 illustrates the details of a cornea color decision processing S54 executed by a mirror image decision unit 116.

### Description of Embodiments

The following section will describe an embodiment of the present invention in detail. In the following embodiment, an example will be described in which only a face image is used as the individual identification information for an identification purpose. However, an iris image can be used in addition to or instead of the face image. When the iris image is used instead of or in addition to the face image, the term "face image" used in the following description may be synonymously used as the wording "the face image and the iris image" or "the iris image". The individual identification information is not limited to the "face" or "iris" and may be any information by which the identification can be verified. The term "user" herein means any person to be identified through the personal identification system.

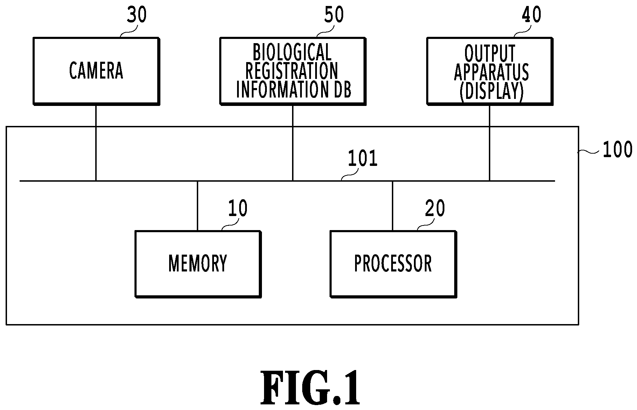

Fig. 1 illustrates a hardware configuration example of the personal identification system of this embodiment. Fig. 1 illustrates the personal identification system of this embodiment including a memory 10, a processor 20, a camera 30, an output apparatus 40, and biological registration information DB 50 that are connected via a bus 101. The processor 20 executes a processing based on a predetermined program by writing or reading data to or from the memory 10. The memory 10 and the processor 20 are provided in the identification processing apparatus 100 and function as a processing means to execute a predetermined function.

The camera 30 acquires a face image of a user by photographing the user to provide the acquired image to the identification processing apparatus 100. The camera 30 can acquire an image with a predetermined FPS (frame per second). The camera 30 may be configured to always acquire an image once being activated or to acquire an image only within a predetermined time based on an instruction from the identification processing apparatus 100.

The output apparatus 40 is an apparatus to directly or indirectly output a predetermined image to a user eye and can use a display or a projector for example. The following description will be made based on an example in which the output apparatus 40 is a display 40. The display 40 must be seen from a user and thus is placed at a position that can be easily seen from the user. The personal identification system of this embodiment allows the display 40 to display various displays including a display pattern. For example, the display 40 can display information required for the user to thereby prompt the user to look at the information.

The display pattern is a combination pattern of sequentially-changing colors. In the personal identification system of this embodiment, the "identity theft" is determined by displaying, in addition to the conventional personal identification based on a face image, a display pattern generated whenever a user looking at display 40 is subjected to the identification to confirm whether or not a cornea region of a face image photographed by the camera 30 includes a mirror image of the generated display pattern. The decision for the "identity theft" is not for the purpose of the individual identification but for deciding whether or not the image of an identification target is captured from nonbiological information such as a photograph or an image for example.

The biological registration information DB 50 is a recording medium in which such information is registered that is used for the personal identification and the decision for the "identity theft". The biological registration information DB 50 can be configured as a database in which information for a plurality of registrants is recorded as tables for the respective registrants. The recording medium in which these pieces of information are registered is not limited to the biological registration information DB 50 and may have another configuration using a recording chip of a passport or an identification card including an IC chip. When the information is registered in a recording chip of a passport or an identification card including an IC chip, an apparatus to read the recording chip is connected to the bus 101.

Information used for the personal identification may include, in addition to information to identify a user such as an ID or a name, a feature parameter or a face image to individually identify the user for example. The information used to decide the "identity theft" may include, in addition to information to identify a user such as an ID or a name, information such as a reflection characteristic of a cornea region including the color gamut of the iris of the user. These pieces of information are recorded in the biological registration information DB 50 while being associated with the respective users.

Each user has a different characteristic showing what color is reflected from a cornea region when a predetermined display color is projected in the cornea region. Furthermore, a different color gamut value of the iris of the user determines a different color gamut value of the display color that tends to be decided. The reflection characteristic of the cornea region as described above is not a characteristic that can be sufficiently used for the individual identification but is not always the same for all users. Thus, the reflection characteristics of the cornea regions obtained through the calibration can be registered and can be used as calibration information to decide the "identity theft", thereby providing the "identity theft" decision in a more accurate and more efficient manner. The calibration information has an objective of providing the "identity theft" decision in an accurate and efficient manner. Thus, the calibration information may be information showing that the user is applicable to one of some classified types.

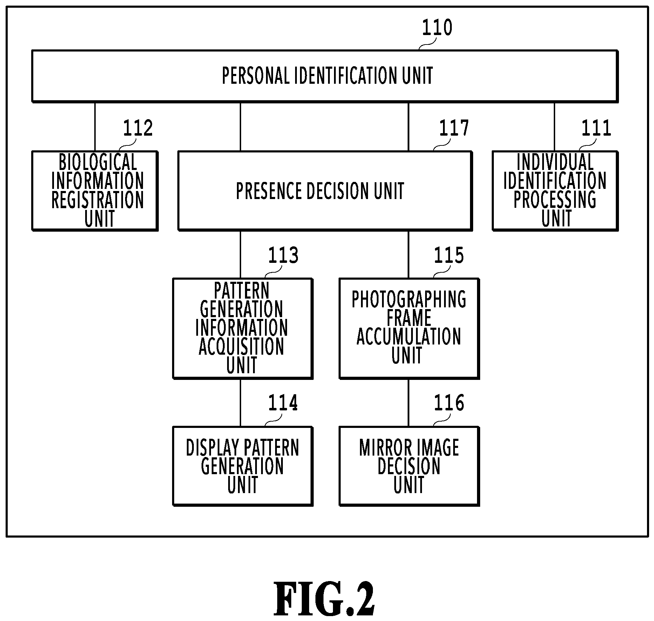

Fig. 2 illustrates the functional blocks of one example of the identification processing apparatus 100 of the personal identification system of this embodiment. The identification processing apparatus 100 is configured to include: a personal identification unit 110; an individual identification processing unit 111; a biological information registration unit 112; the pattern generation information acquisition unit 113; the display pattern generation unit 114; a presence decision unit 117; the photographing frame accumulation unit 115; and the mirror image decision unit 116. Upon receiving an input of the identification information from a user, the personal identification unit 110 in the identification processing apparatus 100 controls the respective units of the personal identification system to extract, from the biological information registration unit 112, registration information associated with the inputted identification information to execute, based on the extracted registration information, the personal identification based on the individual identification using a face image and the "identity theft" decision using a display pattern. When the registration is requested prior to the identification processing, the biological information registration unit 112 is controlled to perform a registration processing to register the user information in the biological registration information DB 50.

The individual identification processing unit 111 performs a processing to identify the user based on whether or not the user matches a face image registered in the biological registration information DB 50. The identification processing performed by the individual identification processing unit 111 may use known personal identification methods using a face image or a feature parameter. For example, such methods may be used to identify the user based on whether or not a registered face image or a face feature parameter of the user matches a face image photographed by the camera 30 or a feature parameter extracted from the face image. However, the invention is not limited to this.

The biological information registration unit 112 executes a processing to perform the registration in the biological registration information DB 50. The biological information registration unit 112 uses the camera 30 to photograph a user to be registered in the personal identification system to extract the face image of the user, optionally a feature parameter, and calibration information to register these pieces of information while being associated with the user identification information (e.g., an ID or a name).

The pattern generation information acquisition unit 113 accesses the biological registration information DB 50 or the camera 30 to acquire information required to generate a display pattern. The display pattern generation unit 114 generates a display pattern based on the information acquired by the pattern generation information acquisition unit 113. The display pattern is generated whenever a new identification operation is performed.

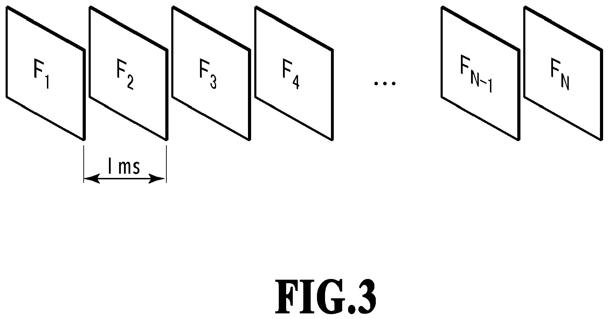

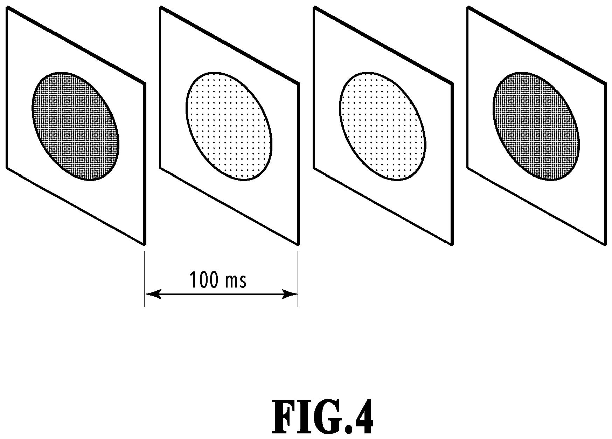

Fig. 3 illustrates the outline of the display pattern generated by the display pattern generation unit 114. Fig. 4 illustrates one example of a specific display pattern. The following section will describe the display pattern generated by the display pattern generation unit 114 and displayed in the display 40 in more detail.

As shown in Fig. 3, the display pattern is configured by an image (frame) group consisting of N images (frames) and is used to differentiate that an image (photographing frames) acquired for the personal identification is not the "identity theft". The respective images constituting the image group have arbitrary shapes painted with a single color. An arbitrary shaped-image includes an image of a color only. A different color is used to paint an image depending on the color gamut of the iris of the user for example.

When the pattern generation information acquisition unit 113 decides the frame switching speed (I[ms]) and the color palette (M types from C1 to CM), the display pattern generation unit 114 can specify parameters such as the total frame number (N), the frame drawing color (FCn (n=1-N)={C1-Cm}), and the displayed shape and can generate a display pattern obtained by repeating a display pattern sequentially displaying N images with an interval I[ms] representing shapes painted with any of M colors included in the color palette.

The display pattern as shown in Fig. 4 is generated as one example when the frame switching speed is determined as "100[ms]" and the color palette is determined to include two types of C₁ and C₂ and the total frame number is determined as "4" and the frame drawing color is determined as FC₁=C₁, FC₂=C₂, FC₃=C₂, and FC₄=C₁ and the displayed shape is determined as to be "circular".

The frame switching speed (I[ms]) is decided depending on the camera FPS showing how many frames are photographed by the camera per second. For example, the frame switching speed can be set to be the same as the interval of the photographing frames corresponding to the camera FPS.

The color palette (M types:C1-CM) is determined depending on the calibration information and is decided as a color that tends to be decided depending on the color of the iris for example. When the number M of the colors included in the color palette (palette number) is excessively high, the color gamuts are caused to be close to one another to thereby cause an error in the color decision. Thus, a smaller palette number is preferred. On the other hand, a higher palette number is preferred in order to provide an improved decision accuracy or a reduced decision time.

The total frame number (N) can be decided based on the decision accuracy and the decision time. For example, a high decision accuracy can be provided by increasing the total frame number and a reduced decision time can be provided by reducing the frame number. It is not necessary for the display pattern generation unit 114 to decide the total frame number or the displayed shape whenever the identification is performed. Thus, a predetermined parameter may be used by the display pattern generation unit 114 to generate the display frame.

In the example shown in Fig. 4, an example was described in which the "arbitrary shape painted with a single color" drawn in the frame has only a single shape (or a circular shape in this example). However, the invention is not limited to this. Thus, other shapes such as a star-like shape or a triangular shape may be combined. By displaying a combination of a plurality of shape patterns, the planar reflection from a mirror for example can be easily identified using the existence or nonexistence of the distortion of the shape, thus providing an improved decision accuracy.

The photographing frame accumulation unit 115 allows the display pattern generated by the display pattern generation unit 114 to be drawn in the display 40 during which photographing frames of a predetermined number or more are acquired in which the eye of the user is included in the photographing frames in the camera 30. From the viewpoint that the "identity theft" is decided in the personal identification, the photographing frames accumulated in the photographing frame accumulation unit 115 (photographed and acquired images) are preferably used in the personal identification in the individual identification processing unit 111.

The mirror image decision unit 116 extracts a cornea region from the photographing frames accumulated in the photographing frame accumulation unit 115 to decide, with regard to the extracted cornea region, whether or not the eye has a spherical surface based on the magnitude of the distortion of the shape of the display frame projected in the cornea to estimate the color gamut of the display pattern based on the color gamut of the cornea region.

The presence decision unit 117 decides the existence or nonexistence of the "identity theft" by comparing the display pattern estimated by the pattern generation information acquisition unit 113, the display pattern generation unit 114, the photographing frame accumulation unit 115, and the mirror image decision unit 116 with a display pattern actually displayed in the display to find the conformity therebetween. When no conformity is found therebetween, the existence of the "identity theft" is decided.

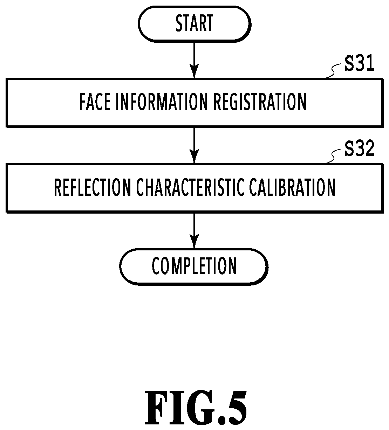

Fig. 5 illustrates the processing flow illustrating the flow of the preregistration in a personal identification system of this embodiment. In the personal identification system of this embodiment, in order to perform the biological identification, biological information is registered in advance in the biological registration information DB 50 based on the processing flow shown in Fig. 5. The preregistration processing is performed by receiving a preregistration processing instruction from a user (S31) to subsequently execute the processing S32 to perform the reflection characteristic calibration.

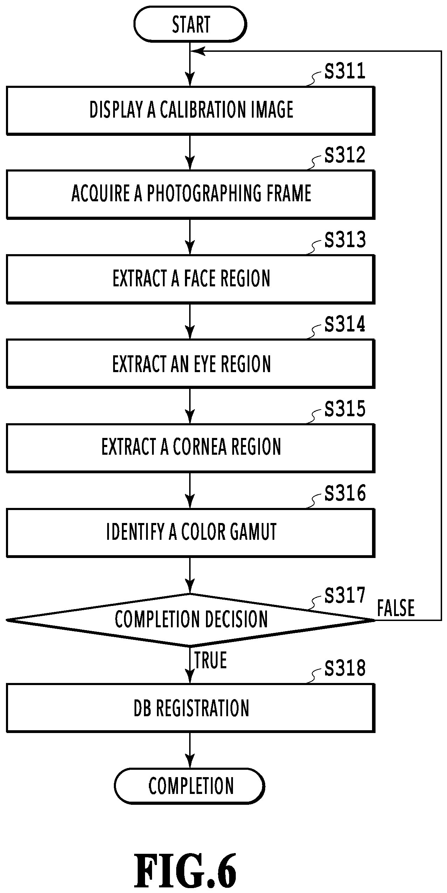

Fig. 6 illustrates the details of the reflection characteristic calibration processing S32. In the reflection characteristic calibration processing S32, the display 40 firstly displays a calibration image (S311) to allow the camera 30 to acquire, as a photographing frame, a face in which an image of a display pattern is projected in a pupil (S312).

After the acquisition of the photographing frame, the biological information registration unit 112 extracts a face region as a region of the face from the photographing frame (S313) to extract, from the extracted face region, an eye region as a region of the eye (S314) to extract, from the eye region, a cornea region as a region of the cornea (S315). By subjecting the extracted cornea region to a color gamut decision, information for the color gamut of the cornea of the to-be-registered user can be identified as the reflection characteristic of the cornea (S316).

The biological information registration unit 112 performs a completion decision when the image of the face region as information for the personal identification and the reflection characteristic as information for deciding the "identity theft" are identified for a set of colors (S317). When the completion is decided (S317:True), the biological information registration unit 112 establishes the association among information for identifying the user, the face region image, and the cornea reflection characteristic to register these pieces of information in the biological registration information DB 50 (S318). When the completion is not decided (S317:False), the processing returns to the processing S31 to display the calibration image.

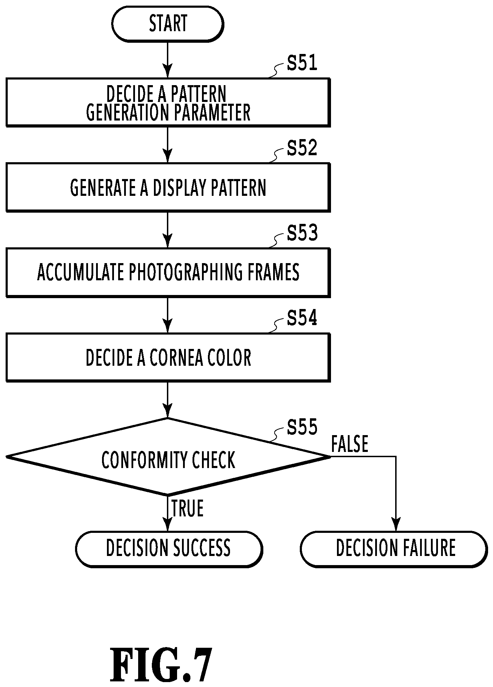

Fig. 7 illustrates the processing flow of the presence decision processing to decide whether or not the identification target is the "identity theft" in the personal identification system of this embodiment. According to the personal identification system of this embodiment, in addition to the personal identification using the face image of the user, the "identity theft" decision is performed to decide whether or not the identification target is the "identity theft" based on the processing flow shown in Fig. 5 (the presence decision processing). The presence decision processing can be executed simultaneously with or before or after the known personal identification processing by the individual identification processing unit 111.

In the presence decision processing, the pattern generation parameter deciding processing S51 is performed to use the pattern generation information acquisition unit 113 to generate a display pattern. The display pattern generation processing S52 is performed to generate a display pattern based on the parameters decided by the display pattern generation unit 114. Thereafter, the photographing frame accumulation processing S53 is performed to allow the photographing frame accumulation unit 115 to accumulate photographing frames that are images photographed and acquired by the camera 30. Then, the cornea color decision processing S54 is performed to allow the mirror image decision unit 116 to decide the color of the cornea of the user. Then, the conformity check processing S55 is performed to allow the presence decision unit 117 to decide the existence or nonexistence of the "identity theft". The conformity check processing S55 resulting in the existence of the "identity theft" (S55:False) means a decision failure while the conformity check processing S55 resulting in the nonexistence of the "identity theft" (S55:True) means a decision success.

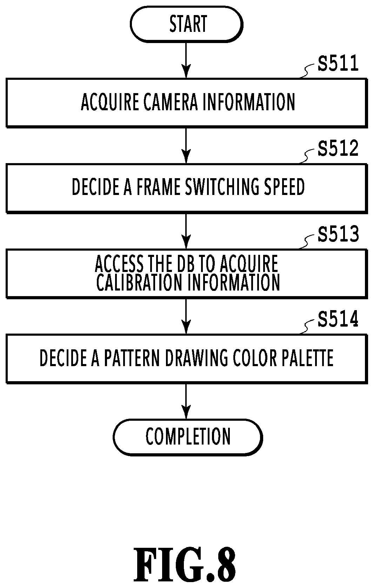

Fig. 8 illustrates the details of the pattern generation parameter deciding processing S51 executed by the pattern generation information acquisition unit 113. In the pattern generation parameter deciding processing S51, the camera 30 is accessed to acquire the FPS information of the camera (S511). After the acquisition of the FPS information of the camera, then the frame switching speed I[ms] is decided based on the acquired FPS information (S512).

Next, the biological registration information DB 50 is accessed to acquire calibration information (S513). Based on the acquired calibration information, the color palettes C₁-C_{M} used for the display pattern is decided (S514) so that the color palettes C₁-C_{M} include such colors that have a large change in hue due to the cornea reflection. For example, the iris color of the user is acquired as the calibration information and display colors that can be used for the color decision for this iris color are decided as color palette colors.

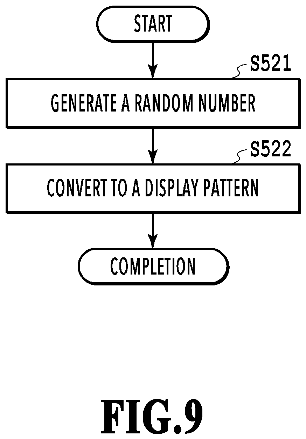

Fig. 9 illustrates the details of the display pattern generation processing S52 executed by the display pattern generation unit 114. In the display pattern generation processing S52, a random number is firstly generated (S521). The generated random number is used to decide, based on the random number, the drawing colors FC₁ -FC_{N} of the respective frames of the display pattern to generate the display pattern (S522). The drawing colors are selected from the color palette. The total frame number N is decided depending on the set decision accuracy or decision time.

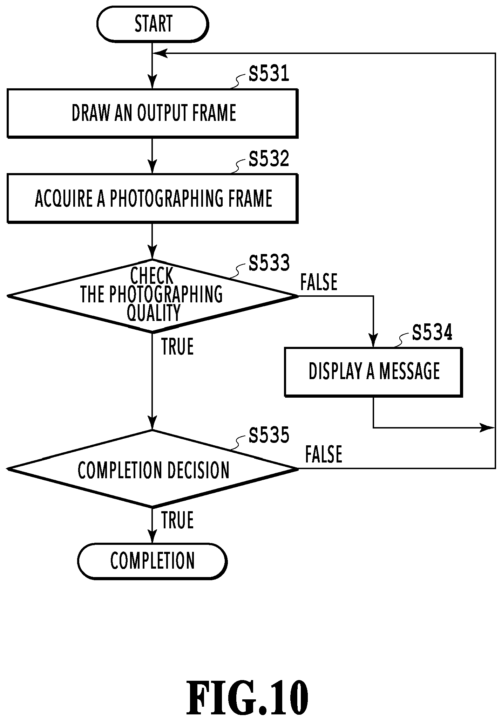

Fig. 10 illustrates the details of the photographing frame accumulation processing S53 executed by the photographing frame accumulation unit 115. The photographing frame accumulation unit 115 draws, on the display 40, the image generated in the display pattern generation processing S52 (S531) to acquire photographing frames in the camera 30 (S532). The photographing frames of a predetermined number or more are acquired. The acquired photographing frames are accumulated in the photographing frame accumulation unit 115. Thereafter, the photographing frame accumulation unit 115 confirms the photographing quality showing that the eye of the user is correctly projected in the acquired photographing frames (S533).

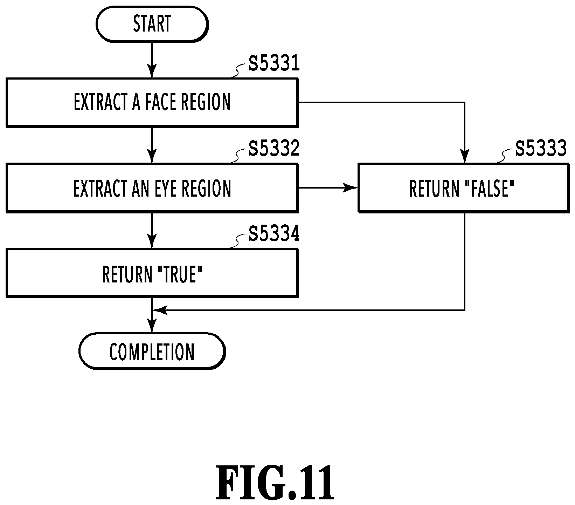

Fig. 11 illustrates the details of the processing S533 executed by the photographing frame accumulation unit 115 to check the photographing quality. In Fig. 11, the photographing frame accumulation unit 115 extracts a face region in the image of the acquired photographing frame (S5331) to subsequently extract an eye region (S5332). When the face region or the eye region cannot be extracted in these extraction processings, "False" is returned as a photographing quality to the photographing frame accumulation processing S53 (S5333). When the face region and the eye region can be both extracted on the other hand, "True" is returned as a photographing quality to the photographing frame accumulation processing S53.

Returning to Fig. 10, when "False" is returned as a photographing quality in S533, the photographing frame accumulation unit 115 allows the display 40 to display a message for attention such as "please turn your eyes here" (S534). The attention message is not limited to the display in the display 40 and also may be an audio attention message for example. When the photographing quality is outputted as "True" in S533, the photographing frame accumulation unit 115 performs the completion decision based on whether or not a fixed time is reached for a photographing amount (or an accumulation amount) (S535). When the completion is possible, the processing is completed. When the completion is impossible, the processing returns to the output frame drawing processing S531.

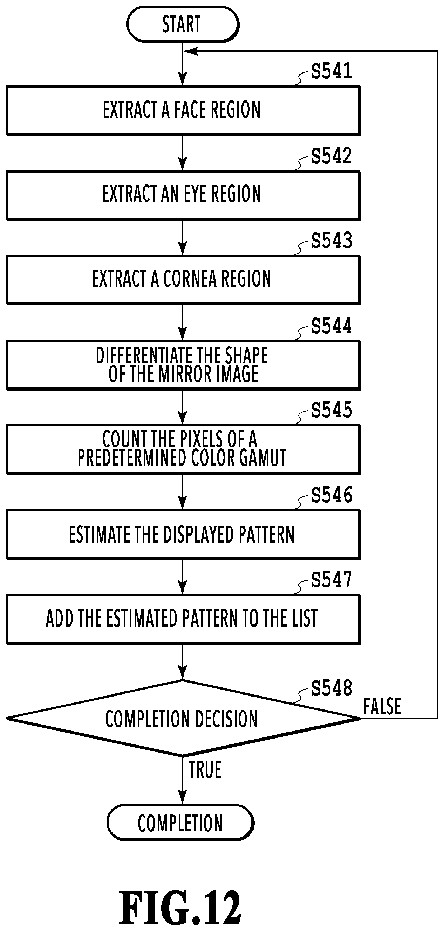

Fig. 12 illustrates the details of the cornea color decision processing S54 executed by the mirror image decision unit 116. The mirror image decision unit 116 extracts a face region from the photographing frames accumulated in the photographing frame accumulation unit 115 (S541), extracts a region of the eye (S542), and extracts a cornea region (S543). The mirror image decision unit 116 decides, with regard to the extracted cornea region, whether or not the eye a spherical surface based on the magnitude of the distortion of the shape of the display frame projected in the cornea (S544). Next, the mirror image decision unit 116 measures the predetermined pixel number of the color gamut (S545). Based on the pixel number measured in S545, the colors of the display pattern displayed to the mirror image projected in the cornea are estimated (S546) and the estimated colors of the display pattern are added to the list (S547). The mirror image decision unit 116 decides the completion based on whether or not the list has a fixed length. When the completion is not achieved, the processing returns to the extraction processing in S541 to extract the face region.

Returning to Fig. 7, the presence decision unit 117 causes the processings from Fig. 8 to Fig. 12 to be executed and compares the estimated display pattern prepared as a list having a fixed length with a display pattern actually displayed in the display to confirm the conformity therebetween.

According to the personal identification system of this embodiment as described above, the "identity theft" can be decided including the one using a photograph, a moving image, or a cornea part of a photograph attached to a mirror for example as described below.

### (The decision of the "identity theft" using a photograph)

When the photograph of the face of the user is used for the identification, the image displayed in the display is not projected in the cornea. Thus, no conformity is found between the display pattern and a pattern decided based on the mirror image, thus resulting in a decision failure.

### (The decision of the "identity theft" using a moving image)

When the photograph of the face of the user is used to prepare a moving image in which some color is placed on the cornea, the display pattern is randomly generated whenever the identification is performed. Thus, no conformity is found between the display pattern and a pattern decided based on the mirror image, thus resulting in a decision failure.

### (The decision of the "identity theft" using a mirror attached to a cornea part of a photograph)

When a mirror attached to a cornea part of a photograph of the face of the user is used for the identification, a difference in the reflection frequency characteristic between the cornea and the mirror causes, even when the same image is projected, a mirror image having a different color. Thus, no conformity is found between the display pattern and a pattern decided based on the mirror image, thus resulting in a decision failure.

### (The decision of the "identity theft" using a photograph or solid model in which an artificial eye is attached to a cornea part)

When an artificial eye attached to a cornea part of a photograph or solid model of the face of a user is used for the identification, a difference in the reflection frequency characteristic between the user cornea and the artificial eye causes, even when the same image is projected, a mirror image having a different color. Thus, no conformity is found between the display pattern and a pattern decided based on the mirror image, thus resulting in a decision failure.

### Industrial Applicability

The personal identification system of this embodiment is can be embedded in the user identification in an airport entry visa inspection system, an entrance inspection system in a building such as a plant, or in a smartphone, tablet (a smartphone or a tablet may be also referred to as a portable terminal), or computer terminal.

## Claims

1. A personal identification system (100) for performing personal identification based on individual identification information, comprising:
a biological information registration means (112) for registering calibration information comprising a reflection characteristic of a cornea region including a color gamut of an iris of an eye of a user;
a pattern generation information acquisition means (113) for acquiring the registered calibration information to determine a color palette, wherein colors included in the color palette are determined depending on the calibration information;
a generation means (114) for generating a display pattern that is a combination pattern of sequentially-changing colors, wherein colors included in the display pattern are determined from the color palette;
an output means (115) for outputting the generated display pattern for display;
a photographing means (115) for acquiring, during the output for display output, a plurality of images obtained by photographing an eye of a user;
an estimation means (116) for estimating a display pattern based on the color gamuts of cornea regions of the eye included in the respective acquired plurality of images; and
a decision means (117) for deciding, when the conformity is found between the estimated display pattern and the outputted display pattern for display, that the user is not an identity theft.

2. The personal identification system according to claim 1, wherein: the generation means generates, as a display pattern, a combination pattern of randomly and sequentially-changing two or more colors.

3. The personal identification system according to claim 1 or 2, wherein: the pattern generation information acquisition means decides, as a color included in the display pattern, a color having a high hue change due to the reflection characteristic of the cornea region including the color gamut of the iris of the eye of the user.

4. The personal identification system according to any one of claims 1 to 3, wherein: the display pattern also has a sequentially-changing shape.

5. An entry visa inspection system comprising the personal identification system according to any one of claims 1 to 4.

6. An entrance inspection system comprising the personal identification system according to any one of claims 1 to 4.

7. A portable terminal comprising the personal identification system according to any one of claims 1 to 4.

8. A computer terminal comprising the personal identification system according to any one of claims 1 to 4.

9. A personal identification method executed by a computer for personal identification based on individual identification information, comprising:
a registration step (S318) for registering calibration information comprising a reflection characteristic of a cornea region including a color gamut of an iris of an eye of a user;
an acquisition step (S513) for acquiring the registered calibration information to determine a color palette, wherein colors included in the color palette are determined depending on the calibration information;
a generation step (S52) of generating a display pattern that is a combination pattern of sequentially-changing colors, wherein colors included in the display pattern are determined from the color palette;
an output step (S53) of outputting the generated display pattern for display;
a photographing step (S53) of acquiring, during the output for display output, a plurality of images obtained by photographing an eye of a user;
an estimation step (S54) of estimating a display pattern based on the color gamuts of cornea regions of the eye included in the respective acquired plurality of images; and
a decision step (S55) of deciding, when the conformity is found between the estimated display pattern and the outputted display pattern for display, that the user is not an identity theft.

10. One or more computer readable storage medium for storing a personal identification program for personal identification based on individual identification information, the program causes a computer to function as:
a biological information registration means (112) for registering calibration information comprising a reflection characteristic of a cornea region including a color gamut of an iris of an eye of a user;
a pattern generation information acquisition means (113) for acquiring the registered calibration information to determine a color palette, wherein colors included in the color palette are determined depending on the calibration information;
a generation means (114) for generating a display pattern that is a combination pattern of sequentially-changing colors, wherein colors included in the display pattern are determined from the color palette;
an output means (115) for outputting the generated display pattern for display;
a photographing means (115) for acquiring, during the output for display output, a plurality of images obtained by photographing an eye of a user;
an estimation means (116) for estimating a display pattern based on the color gamuts of cornea regions of the eye included in the respective acquired plurality of images; and
a decision means (117) for deciding, when the conformity is found between the estimated display pattern and the outputted display pattern for display, that the user is not an identity theft.

## Patentansprüche

1. Persönliches Identifizierungssystem (100) zur Durchführung einer persönlichen Identifizierung, basierend auf individuellen Identifizierungsinformationen, umfassend:
ein biologisches Informationsregistrierungsmittel (112) zum Registrieren einer Kalibrierungsinformation, umfassend eine Reflexionseigenschaft einer Hornhautregion, darin eingeschlossen ein Farbbereich einer Iris eines Auges eines Benutzers;
ein Mustererzeugungs-Informationserfassungsmittel (113) zum Erfassen einer registrierten Kalibrierungsinformation, um eine Farbpalette zu bestimmen, wobei Farben, eingeschlossen in der Farbpalette, in Abhängigkeit von der Kalibrierungsinformation bestimmt werden;
ein Erzeugungsmittel (114) zum Erzeugen eines Anzeigemusters, wobei es sich um ein Kombinationsmuster von sich sequenziell ändernden Farben handelt, wobei Farben, eingeschlossen im Anzeigemuster, aus der Farbpalette bestimmt werden;
ein Ausgabemittel (115) zum Ausgeben des erzeugten Anzeigemusters zur Anzeige;
ein Fotografiermittel (115) zum Erfassen, während der Ausgabe für die Anzeigeausgabe, einer Vielzahl von Bildern, die durch Fotografieren eines Auges eines Benutzers erhalten werden;
ein Schätzmittel (116) zum Schätzen eines Anzeigemusters basierend auf den Farbbereichen von Hornhautregionen des Auges, eingeschlossen in der jeweiligen erfassten Vielzahl von Bildern; und
ein Entscheidungsmittel (117), um zu entscheiden, wenn die Übereinstimmung zwischen dem geschätzten Anzeigemuster und dem ausgegebenen Anzeigemuster für die Anzeige gefunden wird, dass der Benutzer kein Identitätsbetrug ist.

2. Persönliches Identifizierungssystem nach Anspruch 1, wobei: das Erzeugungsmittel als ein Anzeigemuster ein Kombinationsmuster aus zufällig und sich sequenziell ändernden zwei oder mehreren Farben erzeugt

3. Persönliches Identifizierungssystem nach Anspruch 1 oder 2, wobei: das Mustererzeugungs-Informationserfassungsmittel als eine Farbe, enthalten im Anzeigemuster, eine Farbe bestimmt, die einen großen Farbtonwechsel aufgrund der Reflexionseigenschaften der Hornhautregion aufweist, darin eingeschlossen den Farbbereich der Iris des Auges des Benutzers.

4. Persönliches Identifizierungssystem nach Anspruch 1 bis 3, wobei: das Anzeigemuster auch eine sich sequenziell ändernde Form aufweist.

5. Einreisevisum-Inspektionssystem, umfassend das persönliche Identifizierungssystem nach einem der Ansprüche 1 bis 4.

6. Eingangsinspektionssystem, umfassend: das persönliche Identifizierungssystem nach einem der Ansprüche 1 bis 4.

7. Tragbares Endgerät, umfassend das persönliche Identifizierungssystem nach einem der Ansprüche 1 bis 4.

8. Computerendgerät, umfassend das persönliche Identifizierungssystem nach einem der Ansprüche 1 bis 4

9. Persönliches Identifizierungsverfahren, durchgeführt von einem Computer zur persönlichen Identifizierung, basierend auf individuellen Identifizierungsinformationen, umfassend
einen Registrierungsschritt (S318) zum Registrieren einer Kalibrierungsinformation, umfassend eine Reflexionseigenschaft einer Hornhautregion, darin eingeschlossen ein Farbbereich einer Iris eines Auges eines Benutzers;
einen Erfassungsschritt (S513) zum Erfassen einer registrierten Kalibrierungsinformation, um eine Farbpalette zu bestimmen, wobei Farben, enthalten in der Farbpalette, in Abhängigkeit von der Kalibrierungsinformation bestimmt werden;
ein Erzeugungsschritt (S52) zum Erzeugen eines Anzeigemusters, wobei es sich um ein Kombinationsmuster von sich sequenziell ändernden Farben handelt, wobei Farben, enthalten im Anzeigemuster, aus der Farbpalette bestimmt werden;
einen Ausgabeabschritt (S53) zum Ausgeben des erzeugten Anzeigemusters zur Anzeige;
einen Fotografierschritt (S53) zum Erfassen, während der Ausgabe für die Anzeigeausgabe, einer Vielzahl von Bildern, die durch Fotografieren eines Auges eines Benutzers erhalten werden;
einen Schätzschritt (S54) zum Schätzen eines Anzeigemusters basierend auf den Farbbereichen von Hornhautregionen des Auges, enthalten in der jeweiligen erfassten Vielzahl von Bildern; und
einen Entscheidungsschritt (S55) zum Entscheiden, wenn die Übereinstimmung zwischen dem geschätzten Anzeigemuster und dem ausgegebenen Anzeigemuster für die Anzeige gefunden wird, dass der Benutzer kein Identitätsbetrug ist.

10. Ein oder mehrere computerlesbare Speichermedien zum Speichern eines persönlichen Identifizierungsprogramms zur persönlichen Identifizierung basierend auf einer individuellen Identifizierungsinformation, wobei das Programm verursacht, dass der Computer funktioniert als:
ein biologisches Informationsregistrierungsmittel (112) zum Registrieren einer Kalibrierungsinformation, umfassend eine Reflexionseigenschaft einer Hornhautregion, darin eingeschlossen ein Farbbereich einer Iris eines Auges eines Benutzers;
ein Mustererzeugungs-Informationserfassungsmittel (113) zum Erfassen der registrierten Kalibrierungsinformation, um eine Farbpalette zu bestimmen, wobei Farben, erhalten in der Farbpalette, in Abhängigkeit von der Kalibrierungsinformation bestimmt werden;
ein Erzeugungsmittel (114) zum Erzeugen eines Anzeigemusters, wobei es sich um ein Kombinationsmuster von sich sequenziell ändernden Farben handelt, wobei Farben, enthalten im Anzeigemuster, aus der Farbpalette bestimmt werden;
ein Ausgabemittel (115) zum Ausgeben des erzeugten Anzeigemusters zur Anzeige;
ein Fotografiermittel (115) zum Erfassen, während der Ausgabe für die Anzeigeausgabe, einer Vielzahl von Bildern, die durch Fotografieren eines Auges eines Benutzers erhalten werden;
ein Schätzmittel (116) zum Schätzen eines Anzeigemusters basierend auf den Farbbereichen von Hornhautregionen des Auges, enthalten in der jeweiligen erfassten Vielzahl von Bildern; und
ein Entscheidungsmittel (117), zum Entscheiden, wenn die Übereinstimmung zwischen dem geschätzten Anzeigemuster und dem ausgegebenen Anzeigemuster für die Anzeige gefunden wird, dass der Benutzer kein Identitätsbetrug ist.

## Revendications

1. Système d'identification personnelle (100) destiné à effectuer une identification personnelle sur la base d'informations d'identification individuelles, comprenant :
un moyen d'enregistrement d'informations biologiques (112) destiné à enregistrer des informations de calibrage comprenant une caractéristique de réflexion d'une zone de la cornée comprenant une gamme de couleurs d'un iris d'un œil d'un utilisateur ;
un moyen d'acquisition d'informations de génération de motif (113) destiné à acquérir les informations de calibrage enregistrées afin de déterminer une palette de couleurs, dans lequel les couleurs incluses à la palette de couleurs sont déterminées selon les informations de calibrage ;
un moyen de génération (114) destiné à générer un motif d'affichage qui est un motif combiné de couleurs qui changent séquentiellement, dans lequel les couleurs incluses au motif d'affichage sont déterminées à partir de la palette de couleurs ;
un moyen de sortie (115) destiné à délivrer le motif d'affichage généré afin de l'afficher ;
un moyen de photographie (115) destiné à acquérir, pendant la délivrance du motif à afficher, une pluralité d'images obtenues en photographiant un œil d'un utilisateur ;
un moyen d'estimation (116) destiné à estimer un motif d'affichage sur la base des gammes de couleurs des zones de la cornée de l'œil incluses dans la pluralité d'images acquises respectives ; et
un moyen de décision (117) destiné à décider, lorsque la conformité est établie entre le motif d'affichage estimé et le motif d'affichage délivré afin d'être affiché, que l'utilisateur n'est pas un vol d'identité.

2. Système d'identification personnelle selon la revendication 1, dans lequel : le moyen de génération génère, en guise de motif d'affichage, un motif combiné de deux couleurs ou plus qui changent de manière aléatoire et séquentielle.

3. Système d'identification personnelle selon la revendication 1 ou 2, dans lequel : le moyen d'acquisition d'informations de génération de motif décide, en guise de couleur incluse dans le motif d'affichage, d'une couleur présentant un fort changement de teinte en raison de la caractéristique de réflexion de la zone de la cornée comprenant la gamme de couleurs de l'iris de l'œil de l'utilisateur.

4. Système d'identification personnelle selon l'une quelconque des revendications 1 à 3, dans lequel : le motif d'affichage présente également une forme qui change séquentiellement.

5. Système d'inspection de visa d'entrée comprenant le système d'identification personnelle selon l'une quelconque des revendications 1 à 4.

6. Système d'inspection d'entrée comprenant le système d'identification personnelle selon l'une quelconque des revendications 1 à 4.

7. Terminal portable comprenant le système d'identification personnelle selon l'une quelconque des revendications 1 à 4.

8. Terminal informatique comprenant le système d'identification personnelle selon l'une quelconque des revendications 1 à 4.

9. Procédé d'identification personnelle exécuté par un ordinateur en vue d'une identification personnelle sur la base d'informations d'identification individuelles, comprenant :
une étape d'enregistrement (S318) destinée à enregistrer des informations de calibrage comprenant une caractéristique de réflexion d'une zone de la cornée comprenant une gamme de couleurs d'un iris d'un œil d'un utilisateur ;
une étape d'acquisition (S513) destinée à acquérir les informations de calibrage enregistrées afin de déterminer une palette de couleurs, dans lequel les couleurs incluses à la palette de couleurs sont déterminées selon les informations de calibrage ;
une étape de génération (S52) qui consiste à générer un motif d'affichage qui est un motif combiné de couleurs qui changent séquentiellement, dans lequel les couleurs incluses au motif d'affichage sont déterminées à partir de la palette de couleurs ;
une étape de sortie (S53) qui consiste à délivrer le motif d'affichage généré en vue de son affichage ;
une étape de photographie (S53) qui consiste à acquérir, pendant la délivrance du motif à afficher, une pluralité d'images obtenues en photographiant un œil d'un utilisateur ;
une étape d'estimation (S54) qui consiste à estimer un motif d'affichage sur la base des gammes de couleurs des zones de la cornée de l'œil incluses dans la pluralité d'images acquises respectives ; et
une étape de décision (S55) qui consiste à décider, lorsque la conformité est établie entre le motif d'affichage estimé et le motif d'affichage délivré afin d'être affiché, que l'utilisateur n'est pas un vol d'identité.

10. Un ou plusieurs support(s) de stockage lisible(s) par un ordinateur et destiné(s) à stocker un programme d'identification personnelle en vue d'une identification personnelle sur la base d'informations d'identification individuelles, le programme permettant à un ordinateur de fonctionner comme :
un moyen d'enregistrement d'informations biologiques (112) destiné à enregistrer des informations de calibrage comprenant une caractéristique de réflexion d'une zone de la cornée comprenant une gamme de couleurs d'un iris d'un œil d'un utilisateur ;
un moyen d'acquisition d'informations de génération de motif (113) destiné à acquérir les informations de calibrage enregistrées afin de déterminer une palette de couleurs, dans lequel les couleurs incluses à la palette de couleurs sont déterminées selon les informations de calibrage ;
un moyen de génération (114) destiné à générer un motif d'affichage qui est un motif combiné de couleurs qui changent séquentiellement, dans lequel les couleurs incluses au motif d'affichage sont déterminées à partir de la palette de couleurs ;
un moyen de sortie (115) destiné à délivrer le motif d'affichage généré en vue de son affichage ;
un moyen de photographie (115) destiné à acquérir, pendant la délivrance du motif à afficher, une pluralité d'images obtenues en photographiant un œil d'un utilisateur ;
un moyen d'estimation (116) destiné à estimer un motif d'affichage sur la base des gammes de couleurs des zones de la cornée de l'œil incluses à la pluralité d'images acquises respectives ; et
un moyen de décision (117) destiné à décider, lorsque la conformité est établie entre le motif d'affichage estimé et le motif d'affichage délivré, que l'utilisateur n'est pas un vol d'identité.
